# EUROPÄISCHE PATENTANMELDUNG

(11) **EP 0 926 356 A2**
(43) Veröffentlichungstag der Anmeldung: **30.06.1999**
(21) Anmeldenummer: 98811155.5
(22) Anmeldetag: 24.11.1998
(51) Int. Cl.: F15D 1/12

(54) **Verfahren und Vorrichtung zur Energieanreicherung in einer an einer umströmten Oberfläche anliegenden Grenzschicht**

(30) Priorität: 22.12.1997 DE 19757187
(71) Anmelder: ABB RESEARCH LTD., 8050 Zürich (CH)
(72) Erfinder: Lloyd, Jonathan, 5400 Baden (CH)
(74) Vertreter: Liebe, Rainer

(57) **Zusammenfassung**

Aufgabe der Erfindung ist es, ein einfaches Verfahren und eine ebensolche Vorrichtung zur zur Energieanreicherung in einer an einer umströmten Oberfläche anliegenden Grenzschicht zu schaffen, welche einerseits eine Ablösung der Grenzschicht verhindern und andererseits erhöhten Druckverlusten entgegenwirken.

Erfindungsgemäss wird dies dadurch erreicht, dass die Teilströmung (14) nach der Abzweigung von der Hauptströmung (4) um annähernd 180° gedreht und dabei in die Grenzschicht (5) eingeleitet wird. Gleichzeitig mit der Abzweigung der Teilströmung (14) von der Hauptströmung (4) wird von der Grenzschicht (5) eine Teilströmung (15) abgezweigt, um 180° gedreht und in die Hauptströmung (4) eingeleitet. Dazu ist, beabstandet von der Oberfläche (2), ein auf seiner Länge um 180° gewundenes Strömungsleitelement (7) angeordnet.

## Beschreibung

### Technisches Gebiet

Die Erfindung betrifft ein Verfahren zur Energieanreicherung in einer an einer umströmten Oberfläche anliegenden Grenzschicht, gemäss dem Oberbegriff des Anspruchs 1 und eine dazu geeignete Vorrichtung, gemäss dem Oberbegriff des Anspruchs 2.

### Stand der Technik

In der Strömungslehre wird eine Grenzschicht allgemein als unmittelbar an einem festen Körper liegende dünne Fluidschicht definiert. Sie spielt eine besondere Rolle bei der Entstehung von Wirbeln und für den Strömungswiderstand der festen Körper. In vielen Bereichen der Strömungslehre besteht das Bedürfnis, Grenzschichten so zu beeinflussen, dass wenig Wirbel erzeugt und somit Druckverluste verringert werden. Mit zunehmender Grösse bzw. Länge neigen die Grenzschichten jedoch dazu, sich von dem entsprechenden festen Körper abzulösen. Dies kommt insbesondere bei Diffusoren vor, bei denen die Grenzschicht aufgrund starker, turbulenter Fluktuationen bereits nach relativ kurzer Lauflänge in einen turbulenten, zur Ablösung neigenden Strömungszustand umschlägt.

Um eine Ablösung der Strömungsgrenzschicht und die damit verbundene Wirbelbildung sowie Zunahme des Strömungswiderstands des festen Körpers zu verhindern sind zahlreiche Massnahmen zur Grenzschichtbeeinflussung bekannt. Solche Verfahren sind beispielsweise die Grenzschichtabsaugung und die Grenzschichtabblasung. Eine Vielzahl bekannter Lösungen zielt auch auf die Energieanreicherung in der Grenzschicht ab, d. h auf die turbulente Vermischung der energiearmen Grenzschicht mit der energiereichen Hauptströmung durch besondere Wirbelerzeuger oder Turbulenzgeber (US 3974646). Infolge der Plazierung eines oder mehrerer solcher Elemente im Bereich der Hauptströmung bilden sich stromab jedoch Wirbel aus, welche sowohl im Winkel von 90° zur als auch entgegen der Hauptströmung ausgerichtet sind. So kann zwar die Ablösung der Grenzschichten verhindert werden, doch geht dieser Vorteil häufig mit Druckverlusten einher.

Um dies zu verhindern wurde mit der DE-C2 3534268 eine Lösung geschaffen, bei der - ausgehend von flügel- oder keilförmigen, fest auf der umströmten Oberfläche angebrachten Wirbelerzeugern - nunmehr federnde oder gelenkig gelagerte Elemente mit annähernd L-förmigem Querschnitt verwendet werden. Dies ist jedoch eine technisch relativ aufwendige und daher teuere Lösung, welche zudem entgegen der Strömungsrichtung ausgerichtete Wirbel erzeugt.

### Darstellung der Erfindung

Die Erfindung versucht, alle diese Nachteile zu vermeiden. Ihr liegt die Aufgabe zugrunde, ein einfaches Verfahren und eine ebensolche Vorrichtung zur Energieanreicherung in einer an einer umströmten Oberfläche anliegenden Grenzschicht zu schaffen, welche einerseits eine Ablösung der Grenzschicht verhindern und andererseits erhöhten Druckverlusten entgegenwirken.

Erfindungsgemäss wird dies dadurch erreicht, dass bei einem Verfahren gemäss dem Oberbegriff des Anspruchs 1, zunächst die von der Hauptströmung abgetrennte Teilströmung um annähernd 180° gedreht und dabei in die Grenzschicht eingeleitet wird. Gleichzeitig mit der Abzweigung der Teilströmung von der Hauptströmung wird auch von der Grenzschicht eine Teilströmung abgezweigt, letztere um annähernd 180° gedreht und schliesslich in die Hauptströmung eingeleitet.

Infolge dieses Austauschs eines Teils des relativ energiearmen Fluids der Grenzschicht mit einem Teil des vergleichsweise energiereicheren Fluids der Hauptströmung kommt es zu einer Energieanreicherung in der Grenzschicht. Da diese Energieanreicherung jedoch ohne eine wesentliche Massenzunahme realisiert wird, können frühzeitige Ablösungserscheinungen verhindert werden. Die 180°-Drehung der von der Hauptströmung abgetrennten Teilströmung hat zur Folge, dass eine gute Durchmischung des verbleibenden Teils der Grenzschicht mit der von der Hauptströmung abgezweigten Teilströmung und damit eine gleichmässige Verteilung des energiereichen Fluids in der neugebildeten Grenzschicht erreicht wird. Dadurch kann die Ablösung der Grenzschicht weiter verzögert werden. Ein anderer wesentlicher Vorteil ist der, dass keine entgegen der Hauptströmungsrichtung ausgerichteten Wirbel erzeugt und damit Druckverluste verhindert werden.

Die Aufgabe der Erfindung wird auch dadurch gelöst, dass bei einer Vorrichtung gemäss dem Oberbegriff des Anspruchs 3, das in der Hauptströmung angeordnete Element sich vorwiegend in Strömungsrichtung der Hauptströmung erstreckt und als ein auf seiner Länge um 180° gewundenes Strömungsleitelement ausgebildet ist. Es besitzt einen etwa J-förmigen Querschnitt, mit einem kurzen und einem langen Schenkel, wobei der lange Schenkel auf der Länge des Strömungsleitelements zumindest an einem Punkt rechtwinklig zur Oberfläche angeordnet ist und an diesem Punkt eine das Strömungsleitelement mit der Oberfläche verbindende Halterung angreift. Zudem weist das Strömungsleitelement eine Höhe rechtwinklig zur Hauptströmung auf, welche maximal der fünffachen Schichthöhe der Grenzschicht entspricht.

Aufgrund dieser Ausbildung des Strömungsleitelements kommt es zunächst zu einer Verdichtung und Beschleunigung der Grenzschicht, wodurch nach dem Austausch der beiden Teilströmungen eine verbesserte Einmischung der energiereichen Teilströmung in die Grenzschicht erfolgt. Im Gegensatz zu den bekannten Turbulenzerzeugern des Standes der Technik wird die Vermischung der energiearmen Grenzschicht mit der energiereichen Hauptströmung in erster Linie jedoch nicht durch eine Verwirbelung beider Strömungen, sondern durch den Austausch von Teilströmungen der Grenzschicht und der Hauptströmung realisiert. Weil dabei die jeweiligen Teilströmungen in der Strömungsrichtung der Hauptströmung verbleiben, können sowohl die Druckverluste als auch das Auftreten von Scherschichten minimiert werden. Die erfindungsgemässe Höhe des Strömungsleitelements führt vorteilhaft zu einer Bauteilgrösse, welche mit Standard-Bearbeitungswerkzeugen gefertigt werden kann. Zudem kann ein solches Strömungsleitelement relativ einfach an der umströmten Oberfläche befestigt werden.

Besonders vorteilhaft ist es, wenn mehrmals nacheinander eine Teilströmung der Hauptströmung in die Grenzschicht sowie eine Teilströmung der Grenzschicht in die Hauptströmung eingeleitet wird, wobei die jeweiligen Teilströmungen nach ihrer Abzweigung um annähernd 180° gedreht werden. Auf diese Weise können Ablösungen der Grenzschicht von der gesamten umströmten Oberfläche noch nachhaltiger vermieden werden. Dazu werden in Strömungsrichtung der Hauptströmung mehrere erfindungsgemäss ausgebildete Strömungsleitelemente nacheinander angeordnet.

Schliesslich ist die umströmte Oberfläche mit Vorteil in einer Strömungsmaschine, insbesondere einer Gasturbinenanlage angeordnet und als Diffusorwand einer Turbine ausgebildet.

### Kurze Beschreibung der Zeichnung

In der Zeichnung ist ein Ausführungsbeispiel der Erfindung anhand der Grenzschicht an einer einseitig von Heissgas umgebenen Diffusorwand der Turbine einer Gasturbinenanlage dargestellt.

Es zeigen:
- Fig. 1: eine schematische Darstellung der Strömungsverhältnisse im Diffusor;
- Fig. 2: einen Ausschnitt der Diffusorwand, mit dem erfindungsgemässen Strömungsleitelement;
- Fig. 3: eine Querschnitt durch das Strömungsleitelement, entlang der Linie III-III in Fig. 1;
- Fig. 4: eine Querschnitt durch das Strömungsleitelement, entlang der Linie IV-IV in Fig. 1;
- Fig. 5: eine Querschnitt durch das Strömungsleitelement, entlang der Linie V-V in Fig. 1.

Es sind nur die für das Verständnis der Erfindung wesentlichen Elemente gezeigt. Nicht dargestellt sind beispielsweise die Turbine sowie die Gasturbinenanlage. Die Strömungsrichtung der Arbeitsmittel ist mit Pfeilen bezeichnet.

### Weg zur Ausführung der Erfindung

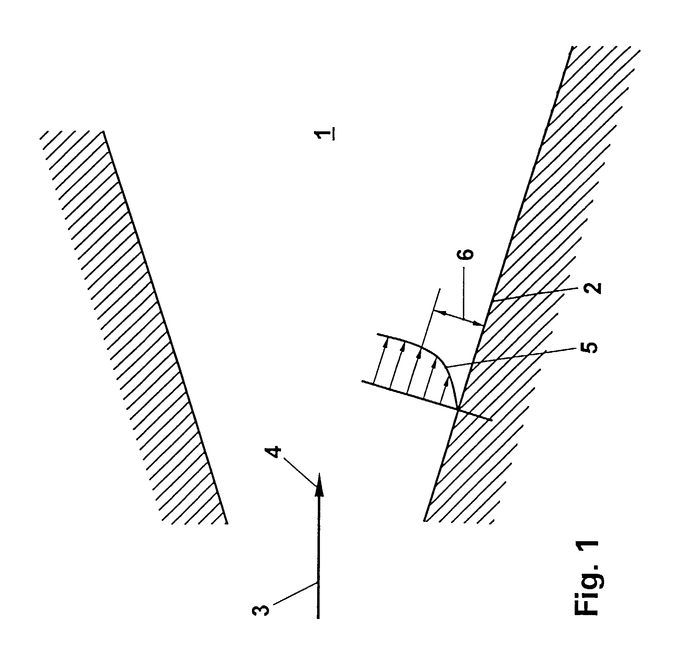

Durch den Innenraum 1 eines Diffusors, von dem nur eine als Wand ausgebildete Oberfläche 2 ausschnittsweise dargestellt ist, wird zum Zwecke der Druckrückgewinnung zuvor in einer Turbine entspanntes und als Heissgas ausgebildetes Fluid 3, in Form einer Hauptströmung 4 geleitet. Dabei wird zwischen der Wand 2 und der Hauptströmung 4 eine ebenfalls fluidische Grenzschicht 5 ausgebildet. Die Schichthöhe 6 der Grenzschicht 5 ist definiert als der Abstand von der Wand 2, in dem die Geschwindigkeit der Grenzschicht 5 etwa 99% der Geschwindigkeit der Hauptströmung 4 erreicht (Fig. 1).

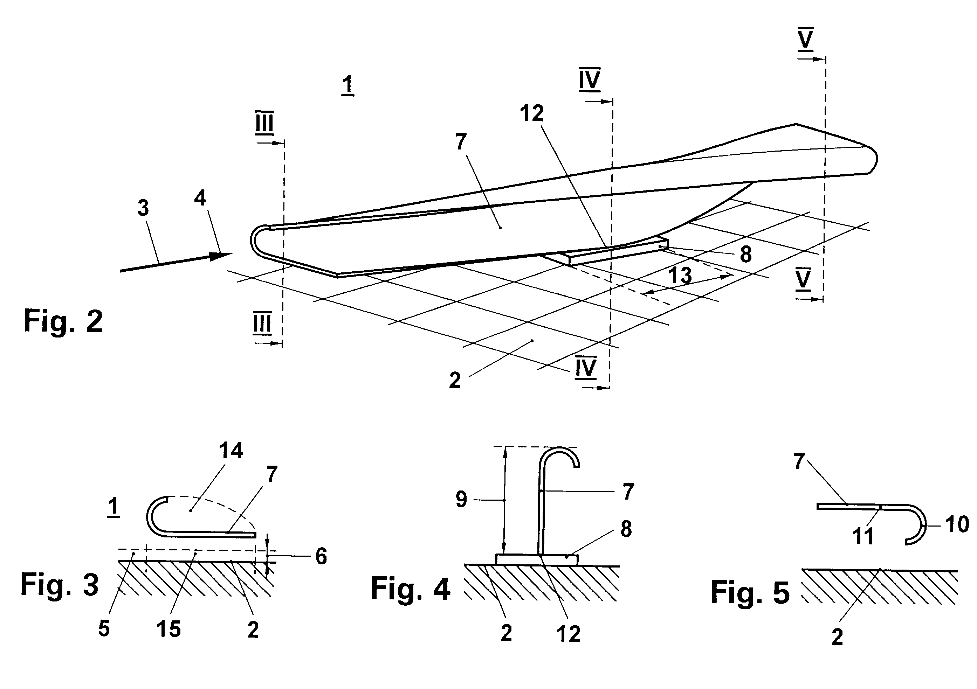

Beabstandet von der der Wand 2 ist ein um 180° schraubenförmig gewundenes Strömungsleitelement 7 mittels einer Halterung 8 befestigt (Fig. 2). Das Strömungsleitelement 7 besitzt eine Höhe 9 rechtwinklig zur Hauptströmung 4, welche etwa der vierfachen Schichthöhe 6 der Grenzschicht 5 entspricht (Fig. 3, Fig. 4). Es weist einen etwa J-förmigen Querschnitt auf und besteht aus einem kurzen sowie einem langen Schenkel 10, 11 (Fig. 5). Auf der Länge des Strömungsleitelements 7 ist der lange Schenkel 11 an einem Punkt 12 rechtwinklig bzw. in einem Bereich 13 unmittelbar stromauf sowie stromab nahezu rechtwinklig zur Oberfläche 2 angeordnet. In diesem Bereich 13 greift die das Strömungsleitelement 7 mit der Oberfläche 2 verbindende Halterung 8 an (Fig. 2, Fig. 4).

Beim Betrieb der Gasturbinenanlage zweigt das Strömungsleitelement 7 eine Teilströmung 14 der turbinenseitig zuströmenden Hauptströmung 4 des Heissgases 3 ab (Fig. 3). Die Teilströmung 14 wird entlang der Oberfläche des gewundenen Strömungsleitelements 7 geführt, dabei um 180° gedreht und in die Grenzschicht 5 eingeleitet. Durch die Anordnung des Strömungsleitelements 7 zwischen der Hauptströmung 4 und der Grenzschicht 5 wird letztere zunächst leicht verdichtet, was zu einer leichten Beschleunigung des Fluids der Grenzschicht 5 führt. Dies hat eine verbesserte Einmischung der Teilströmung 14 in die Grenzschicht 5 zur Folge.

Gleichzeitig mit der Abzweigung der Teilströmung 14 von der Hauptströmung 4 wird durch das Strömungsleitelement 7 eine Teilströmung 15 von der Grenzschicht 5 abgezweigt, um 180° gedreht und dabei in die Hauptströmung 4 eingeleitet. Auf diese Weise erfolgt ein Austausch eines Teils des energiereicheren Fluids der Hauptströmung 4 mit einem Teil des energieärmeren Fluids der Grenzschicht 5, wobei letztere keine Massenanreicherung erfährt.

In Strömungsrichtung der Hauptströmung 4 können auch mehrere Strömungsleitelemente 7 nacheinander angeordnet sein (nicht dargestellt). Dadurch laufen die oben beschriebenen Vorgänge mehrmals hintereinander ab, so dass sich Ablösungen der Grenzschicht 5 von der gesamten umströmten Oberfläche 2 noch nachhaltiger vermeiden lassen.

Natürlich kann das Strömungsleitelement 7 mit ähnlichen Wirkungen auch an einer anderen fluidumströmten Oberfläche 2 angeordnet werden. Eine solche Oberfläche 2 kann beispielsweise Teil eines sonstigen Diffusors, einer Flugzeugtragfläche oder eines Flugzeugrumpfes sein.

### Bezugszeichenliste

- 1: Innenraum
- 2: Oberfläche, Wand
- 3: Fluid, Heissgas
- 4: Hauptströmung
- 5: Grenzschicht
- 6: Schichthöhe, von 5
- 7: Element, Strömungsleitelement
- 8: Halterung
- 9: Höhe, von 7
- 10: kurzer Schenkel, von 7
- 11: langer Schenkel, von 7
- 12: Punkt, von 7
- 13: Bereich, von 7
- 14: Teilströmung, von 4
- 15: Teilströmung, von 5

## Patentansprüche

1. Verfahren zur Energieanreicherung in einer an einer umströmten Oberfläche anliegenden Grenzschicht, bei dem von einer Hauptströmung (4) eines die Oberfläche (2) umströmenden Fluids (3) eine Teilströmung (14) abgezweigt und in die Grenzschicht (5) eingeleitet wird, dadurch gekennzeichnet, dass
a) die Teilströmung (14) nach der Abzweigung von der Hauptströmung (4) um annähernd 180° gedreht und dabei in die Grenzschicht (5) eingeleitet wird,
b) gleichzeitig mit der Abzweigung der Teilströmung (14) von der Hauptströmung (4) eine Teilströmung (15) von der Grenzschicht (5) abgezweigt, um 180° gedreht und in die Hauptströmung (4) eingeleitet wird.

2. Verfahren nach Anspruch 1, dadurch gekennzeichnet, dass mehrmals nacheinander eine Teilströmung (14) der Hauptströmung (4) in die Grenzschicht (5) sowie eine Teilströmung (15) der Grenzschicht (5) in die Hauptströmung (4) eingeleitet wird, wobei die jeweiligen Teilströmungen (14, 15) nach ihrer Abzweigung um annähernd 180° gedreht werden.

3. Vorrichtung zur Energieanreicherung in einer an einer umströmten Oberfläche anliegenden Grenzschicht mit einer Schichthöhe (6), bei welcher beabstandet von der Oberfläche (2) ein Element (7) in der Hauptströmung (4) angeordnet und an der Oberfläche (2) befestigt ist, dadurch gekennzeichnet, dass das Element (7) sich vorwiegend in Strömungsrichtung der Hauptströmung (4) erstreckt und als ein auf seiner Länge um annähernd 180° gewundenes Strömungsleitelement ausgebildet ist.

4. Vorrichtung nach Anspruch 3, dadurch gekennzeichnet, dass das Strömungsleitelement (7) einen etwa J-förmigen Querschnitt, mit einem kurzen und einem langen Schenkel (10, 11) besitzt, der lange Schenkel (11) auf der Länge des Strömungsleitelements (7) zumindest an einem Punkt (12) rechtwinklig zur Oberfläche (2) angeordnet ist und an diesem Punkt (12) eine das Strömungsleitelement (7) mit der Oberfläche (2) verbindende Halterung (8) angreift.

5. Vorrichtung nach Anspruch 4, dadurch gekennzeichnet, dass das Strömungsleitelement (7) eine Höhe (9) rechtwinklig zur Hauptströmung (4) aufweist, welche maximal der fünffachen Schichthöhe (6) der Grenzschicht (5) entspricht.

6. Vorrichtung einem der Ansprüche 3 bis 5, dadurch gekennzeichnet, dass in Strömungsrichtung der Hauptströmung (4) mehrere Strömungsleitelemente (7) nacheinander angeordnet sind.

7. Vorrichtung nach einem der Ansprüche 3 bis 6, dadurch gekennzeichnet, dass die umströmte Oberfläche (2), die innere Oberfläche einer Strömungsmaschine, insbesondere einer Gasturbinenanlage, ist.

8. Vorrichtung nach Anspruch 7 dadurch gekennzeichnet, dass die umströmte Oberfläche (2) als eine Diffusorwand ausgebildet ist.
